# EUROPÄISCHE PATENTSCHRIFT

(11) **EP 1 348 199 B1**
(45) Veröffentlichungstag und Bekanntmachung des Hinweises auf die Patenterteilung: **06.04.2005**
(21) Anmeldenummer: 01996995.5
(22) Anmeldetag: 28.12.2001
(51) Int. Cl.: G06K 19/10, G07D 7/00, G06K 5/00

(54) **VERFAHREN UND EINRICHTUNG ZUR FÄLSCHUNGSSICHEREN KENNZEICHNUNG VON ZIGARETTENPACKUNGEN**
METHOD AND DEVICE FOR IDENTIFYING PACKETS OF CIGARETTES
PROCEDE ET DISPOSITIF D'IDENTIFICATION DE PAQUETS DE CIGARETTES

(30) Priorität: 05.01.2001 DE 10100248
(43) Veröffentlichungstag der Anmeldung: 01.10.2003
(73) Patentinhaber: Focke & Co. (GmbH & Co. KG), 27283 Verden (DE)
(72) Erfinder: FOCKE, Heinz, 27283 Verden (DE); STEINKAMP, Irmin, 21217 Seevetal (DE); WITTEK, Diether, 27308 Kirchlinteln (DE)
(74) Vertreter: Bolte, Erich, Dipl.-Ing.
(86) Internationale Anmeldenummer: PCT/EP2001/015358
(87) Internationale Veröffentlichungsnummer: WO 2002/061677

(56) Entgegenhaltungen:
- EP-A- 0 710 934
- EP-A- 0 889 448
- EP-A- 1 204 078
- WO-A-98/55970

## Beschreibung

Die Erfindung betrifft ein Verfahren zur identifizierbaren Kennzeichnung von Packungen, insbesondere Zigarettenpackungen, mit Hilfe von an den Packungen angebrachten Codes. Weiterhin betrifft die Erfindung eine Einrichtung zur Durchführung des Verfahrens.

Die fälschungssichere Kennzeichnung von Packungen gewinnt vor allem in der Zigarettenindustrie an Bedeutung. Es geht darum, die nicht autorisierte Fertigung bzw. den nicht autorisierten Vertrieb von Markenprodukten durch fälschungssichere Kennzeichnung zu erkennen.

Bekannt sind bildhafte Markierungen an Packungen, deren Herstellung technisch aufwendig ist. Bei der industriellen Nachahmung von Markenprodukten werden auch technisch komplexe Darstellungen an den Packungen übernommen, so dass Sicherheit gegen Fälschungen nicht gegeben ist.

Der Erfindung liegt die Aufgabe zugrunde, Maßnahmen für eine fälschungssichere Kennzeichnung von insbesondere Zigarettenpackungen und deren Überprüfung (Authentifikation) vorzuschlagen, mit dem Ziel, die Korrektheit der Kennzeichnung oder Codierung und damit des Markenprodukts im Nachhinein prüfen zu können.

Diese Aufgabe wird mit einem Verfahren mit den in Anspruch 1 angegebenen Merkmalen sowie einer korrespondierenden Vorrichtung mit den in Anspruch 9 angegebenen Merkmalen gelöst.

Aus der EP 0 889 448 A2 ist ein Verfahren zur Verhinderung des Inverkehrbringens gefälschter Produkte bekannt. Dazu wird vorgeschlagen, die Produkte mit einer unverschlüsselten und einer verschlüsselten Kennzeichnung zu versehen, wobei die verschlüsselte Kennzeichnung die verschlüsselte Form der unverschlüsselten Kennzeichnung ist. Zur Überprüfung des Produktes (Authentifikation) ist vorgesehen, dass die Zusammengehörigkeit von verschlüsselter und unverschlüsselter Kennzeichnung überprüft wird. Dabei wird ein private-/public-Key Verfahren angewandt, wobei der private Schlüssel zur Verschlüsselung und der öffentliche Schlüssel zur Authentifikation verwendet wird.

Aus der WO 98/55970 ist ein weiteres Verfahren zur Authentifikation von mit einer unverschlüsselten und einer zugehörigen verschlüsselten Kennzeichnung versehenen Produkten bekannt. Die Generierung der verschlüsselten Kennzeichnung erfolgt dabei mit einem ersten Gerät. Die Authentifikation, also die Überprüfung der Zusammengehörigkeit von verschlüsselter und unverschlüsselter Kennzeichnung, erfolgt mit einem zweiten Gerät. Beide Geräte umfassen eine eigene Verarbeitungsfunktionalität zum Erzeugen der verschlüsselten Kennzeichnung anhand eines im Gerät gespeicherten Schlüssels bzw. zum Überprüfen der Authentizität eingegebener Daten mittels eines ebenfalls im Gerät gespeicherten Schlüssels.

An der Packung sind Kennzeichen oder Codes angebracht, die aufgrund eines bestimmten, nicht unmittelbar erkennbaren Inhalts die Zuordnung ermöglichen. Die Zuordnung des Codes ist demnach aufgrund einer Überprüfung in Zusammenarbeit mit dem Hersteller möglich, jedenfalls aufgrund einer Anfrage bei einer (zentralen) Sammel- bzw. Speicherstation für die Codes.

Der verschlüsselte Code kann aus Zahlen und/oder Buchstaben bestehen. Für die Verschlüsselung können Verfahren eingesetzt werden, die nicht entschlüsselbar sind, zum Beispiel eine Verschlüsselung mit mathematischer Formel. Ein Polynom 7. Grades ist als Verschlüsselung einer Ziffernkombination nicht zu entschlüsseln. Die verschlüsselte Ziffernkombination, also der Code, hat erfindungsgemäß mehrere Stellen, vorzugsweise etwa 6 bis 12 Stellen.

Zigarettenpackungen sind üblicherweise mit einer unverschlüsselten Kennzeichnung versehen, nämlich mit einer Kennziffer, die Auskunft über Produktionsdaten der Zigaretten gibt. Erfindungsgemäß ist der (verschlüsselte) Code inhaltlich den Kennziffern der betreffenden Packung zugeordnet und zusammen mit diesen an der Packung angebracht. Insbesondere ist der Code eine verschlüsselte Wiedergabe der Kennziffern selbst. Zweckmäßigerweise ist einer Fertigungsanlage, einer "Linie" und/oder jeder (Verpackungs-)Maschine ein Codierungsaggregat zugeordnet, bestehend aus Druckwerk und Rechner. Letzterer führt nach Maßgabe des jeweils vorgegebenen Schlüssels die Verschlüsselung der Codes, insbesondere der Kennziffern durch.

Weiterhin ist von Bedeutung, dass nicht nur die Einzelpackungen bzw. Zigarettenpackungen selbst, sondern auch Gebindepackungen (Zigarettenstangen) und (Versand-)Kartons mit einem verschlüsselten Code - in Verbindung mit jeweils zutreffenden Kennziffern - versehen sind. Die Codes für die verschiedenen Packungstypen stimmen nicht miteinander überein, und zwar durch Anwendung entsprechend unterschiedlicher Schlüssel bzw. aufgrund unterschiedlicher Zusammensetzung der Kennziffern.

Die Handhabung des erfindungsgemäßen Systems erfolgt in der Weise, dass die produktionsbedingten Kennziffern unter Gegenüberstellung der zu diesen gehörenden verschlüsselten Codes zentral erfasst und in (Datenbank-)Listen eines Zentralrechners niedergelegt werden. Die Daten sind bei Bedarf über ein Kommunikationsnetz, insbesondere über Intemet, durch Kunden und/oder Händler abrufbar. Die Überprüfung erfolgt insbesondere in der Weise, dass die Zuordnung eines (verschlüsselten) Codes zu bestimmten Kennziffern gegeben ist. Diese Überprüfung kann für Einzelpackungen, Gebindepackungen und auch für Kartons erfolgen.

Weitere Besonderheiten der Erfindung werden nachfolgend anhand der Zeichnungen näher erläutert. Es zeigt:
- Fig. 1: eine schematische Systemdarstellung für die Anbringung von verschlüsselten Codes an Packungen,
- Fig. 2: eine schematische Systemdarstellung für die Handhabung bzw. Verwertung und Nutzung der verschlüsselten Codes.

In den Zeichnungen geht es um die Codierung bzw. Kennzeichnung von Packungen für die Zigarettenindustrie. Bei dem dargestellten Ausführungsbeispiel sind Zigarettenpackungen 10 des Typs Klappschachtel bzw. Hinge-Lid gezeigt. Des Weiteren sind Gebindepackungen 11 betroffen, also sogenannte Zigarettenstangen aus mehreren Zigarettenpackungen 10 mit einer Außenumhüllung 12 aus Papier, Karton oder Folie. Schließlich sind auch (Versand-)Kartons 13 betroffen, die zur Aufnahme einer Mehrzahl von Gebindepackungen 11 dienen.

Alle Packungsbehälter bzw. Umhüllungen der drei Packungstypen 10, 11 und 13 sind mit einer unverschlüsselten Kennzeichnung, nämlich einer Kennziffer 14, versehen, die Auskunft über Fertigungsdaten gibt. Bei dem vorliegenden Beispiel geben die beiden ersten Buchstaben dd den Produktionstag, die beiden nachfolgenden Buchstaben mm den Produktionsmonat, die weiteren Buchstaben yy das Produktionsjahr, der nächste Buchstabe f die Produktionsstätte, also die Fabrik und schließlich der Buchstabe M die jeweilige Maschine an. Diese Daten sind üblicherweise als Ziffer an der Zigarettenpackung 10 bzw. Gebindepackung 11 und am Karton 13 angebracht. Die Kennziffern 14 können auch so eingeteilt werden, dass kleinere Zeiteinheiten erfasst sind, zum Beispiel Stunden und/oder Minuten. Die Kennziffern 14 werden üblicherweise unmittelbar im Bereich einer zugeordneten Verpackungsmaschine durch ein Druckwerk an den Packungen 10, 11, 13 angebracht.

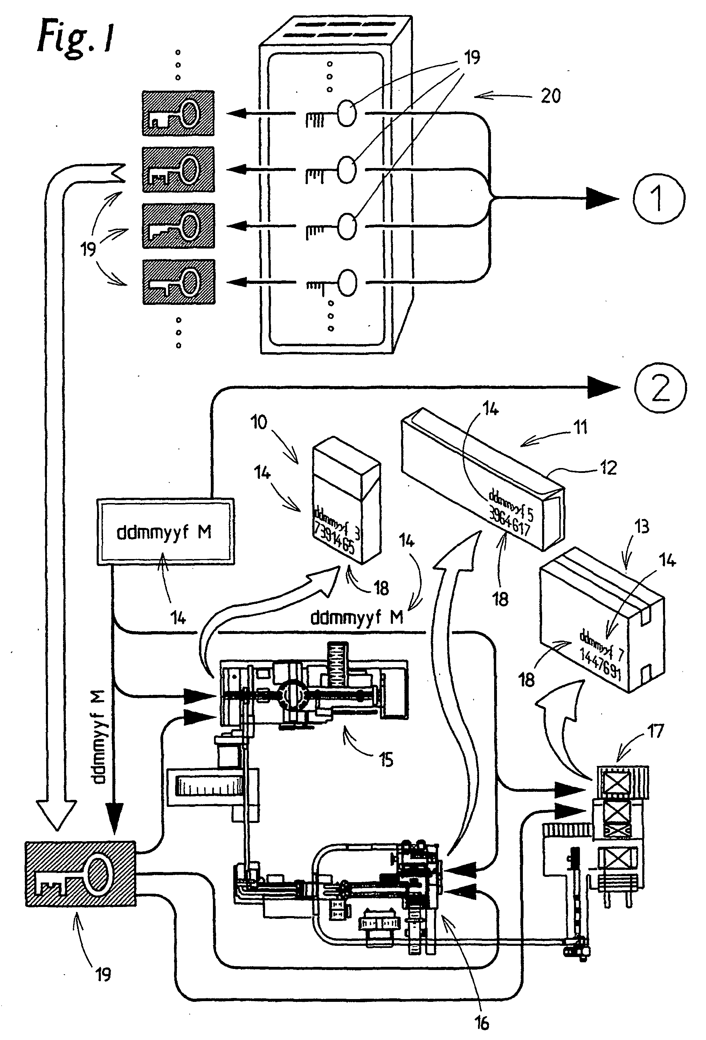

Fig. 1 zeigt als Beispiel eine Fertigungsanlage, nämlich eine sogenannte Linie, für die Herstellung der drei Packungen. Eine erste Verpackungsmaschine - ein Packer 15 - fertigt die Zigarettenpackungen 10, also Klappschachteln mit Zigaretten. Die Zigarettenpackungen 10 werden mit einer Außenumhüllung aus Folie versehen und sodann einem Gebindepacker 16 zugeführt zum Herstellen von aus mehreren Zigarettenpackungen 10 bestehenden Gebindepackungen 11. Die hergestellten Gebindepackungen werden einem Kartonpacker 17 zugeführt, der eine größere Anzahl von Gebindepackungen 11 in Kartons 13 für den Versand verpackt.

Jeder Verpackungsmaschine 15, 16, 17 ist ein eigenständig steuerbares Druckwerk für die Anbringung der Kennziffern 14 zugeordnet.

Darüber hinaus werden im Bereich der Verpackungsmaschinen 15, 16, 17 die verschlüsselten Kennzeichen, also Codes 18, angebracht Diese werden ebenfalls im Bereich der Verpackungsmaschinen 15, 16 und 17 an der jeweiligen Packung angebracht. Hierzu sind besondere Einheiten - Codierungsaggregate - vorgesehen, die mit der Verpackungsmaschine 15, 16, 17 verbunden werden, nämlich ein Druckwerk in Verbindung mit einem Rechner. Letzterer ermittelt den jeweils anzubringenden Code 18 unter Berücksichtigung eines von Fall zu Fall festzulegenden Schlüssels 19. Der Code 18 besteht zweckmäßigerweise aus einer Folge von Ziffern, also aus einer Zufallszahl, kann aber alternativ auch aus anderen erkennbaren Zeichen bestehen. Der Code ist inhaltlich der Kennziffer 14 derselben Packung zugeordnet, ist insbesondere eine verschlüsselte Wiedergabe dieser Kennziffer 14.

Eine Besonderheit des Systems besteht darin, dass einer Verpackungsmaschine oder einer Fertigungsanlage bzw. einer aus mehreren Verpackungsmaschinen bestehende Linie ein Schlüssel 19 zugewiesen wird. Dieser ist in Fig. 1 symbolisch dargestellt. Es handelt sich dabei um ein Programm zur Erstellung des verschlüsselten Codes 18, insbesondere um eine mathematische Formel.

Die aus Rechner und Drucker bestehende Einheit für die Anbringung des verschlüsselten Codes 18 ist so ausgebildet, dass unbefugter Zugang zum Rechner und/oder Drucker nicht möglich ist. Zu diesem Zweck ist die Einheit von einem geschlossenen Gehäuse umgeben - sogenannte Black Box. Der Schlüssel 19 kann dabei über Fernsteuerung eingegeben werden. Es ist aber auch denkbar, die Einheit aus Drucker und Rechner jeweils mit dem vorgegebenen Schlüssel der Produktionsstätte zur Verfügung zu stellen und an der betreffenden Maschine anzubringen.

Der Code 18 ist vorzugsweise eine verschlüsselte Ziffer, aus der ebenfalls Daten über die Fertigung und Verpackung der Zigaretten (oder anderer Produkte) rekonstruiert werden können. Insbesondere ist der Code 18 eine verschlüsselte Wiedergabe der Kennziffer 14. Beide Identifizierungsmerkmale, nämlich Kennziffer 14 und Code 18, sind in unmittelbarer Gegenüberstellung, insbesondere untereinander, an der jeweiligen Packung angebracht.

Der jeweilige Schlüssel 19, von dem in Fig. 1 bildlich, symbolhaft unterschiedliche Ausführungen dargestellt sind, wird in einem Schlüsselrechner 20 ermittelt Der Schlüsselrechner 20 gibt eine Verschlüsselungsformel vor, zum Beispiel ein Polynom 7. Grades. In Verbindung mit den Kennziffern wird hieraus jeweils an Ort und Stelle, nämlich für die Produktionsstätte und/oder für die einzelne Verpackungsmaschine, der der jeweiligen Kennziffer 14 zuzuordnende Code 18 errechnet Dazu ist der Produktionseinheit bzw. jeder Verpackungsmaschine ein Codierungsaggregat zugeordnet, welches aus Druckwerk und Rechner besteht. Der Rechner ermittelt nach dem jeweils vorgegebenen Schlüssel 19 die Codes 18, nämlich eine verschlüsselte Darstellung der Kennziffer 14.

Der vorgegebene Schlüssel 19 ist dabei für eine begrenzte Produktionsdauer der Anlage bzw. Maschine oder für eine begrenzte Produktionsmenge ausgelegt. Bei Erreichen eines vorgegebenen Zeitpunkts oder einer Produktionsmenge wird ein entsprechendes Signal erzeugt oder die Verpackungsmaschine abgeschaltet. Insbesondere kann ein bestimmter Schlüssel 19 begrenzt sein für Codes 18 einer bestimmten, in begrenzter Menge herzustellenden (Zigaretten-)Marke.

Die Identifizierung der Packung bzw. des Produkts ist durch die Produktionsstätte möglich, insbesondere aber durch Großhändler, Einzelhändler und vor allem durch Endverbraucher. Letztere können die Korrektheit der Produkte anhand der Zigarettenpackung 10 oder der Gebindepackung 11, nämlich anhand der Kennziffer 14 in Verbindung mit dem verschlüsselten Code 18 feststellen.

Für die Überprüfung der Korrektheit einer Packung sind die erforderlichen Informationen von einer Zentrale abzurufen. Ein bevorzugter Lösungsweg sieht so aus, dass die Verschlüsselungsformeln bzw. die verschiedenen Schlüssel 19 für Produktionsstätten und/oder Verpackungsmaschinen einem Zentralrechner 21 zugeführt werden. Dieser sammelt demnach die Schlüssel 19 bzw. Codes 18 für die einzelnen Produktionsstätten und/oder Verpackungsmaschinen. Des Weiteren erhält der Zentralrechner 21 die produktionsbedingten, unverschlüsselten Kennziffern 14. Diese Daten werden gespeichert und einem weiteren Zentralrechner zugeführt, nämlich einem Auswertungsrechner 22. Die Übertragung der Daten erfolgt dabei durch Datenträger 23, die einen nicht autorisierten Zugriff zu den Daten verhindern, insbesondere Magnetbänder. Der Datenträger 23 enthält demnach die einander zugeordneten Kennziffern 14 und Codes 18.

Der Auswerterechner 22 hält die Daten für eine Auswertung bzw. für eine Kontrollprüfung bereit. Insbesondere werden jeweils die einer Packung zuzuordnenden Ziffernkombinationen bereitgehalten, nämlich die (unverschlüsselte) Kennziffer 14 mit dem zugeordneten Code 18. Des Weiteren werden die Zahlen bzw. Daten im Bereich des Auswertungsrechners 22 so geordnet, dass die von einer Verpackungsmaschine und/oder von einer Linie und/oder einer umfänglicheren Produktionsstätte gefertigte Charge als Einheit gespeichert und für einen eventuellen Zugriff bereitgehalten wird. So können Daten als Block gespeichert werden, die einem bestimmten Schlüssel 19 zuzuordnen sind.

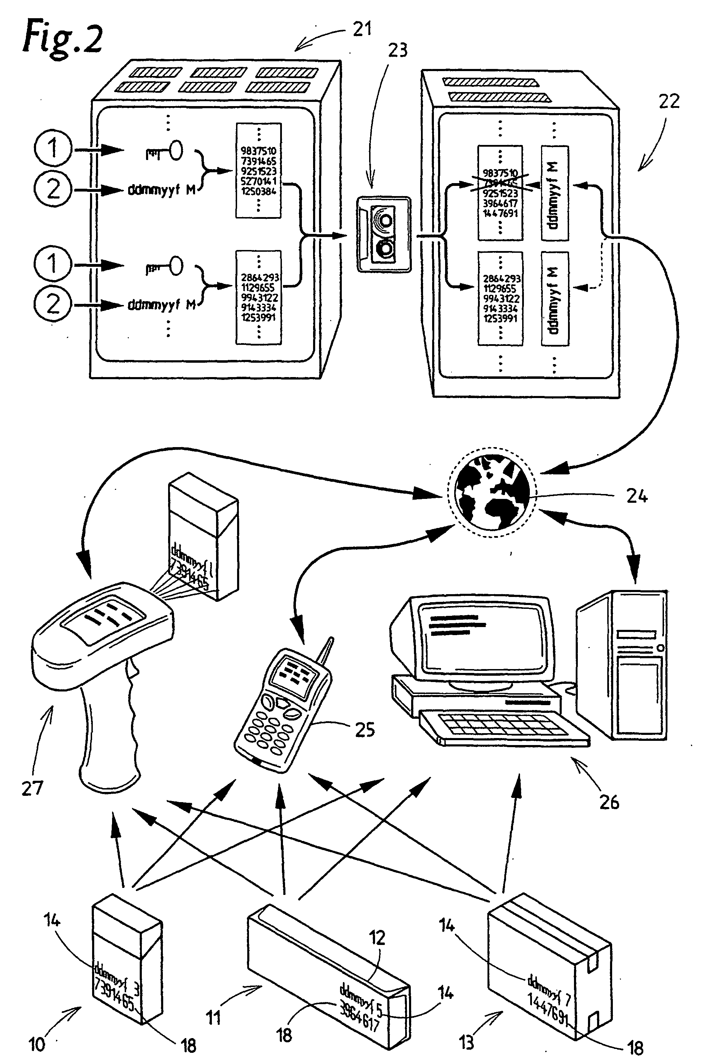

Die gespeicherten Daten können auf verschiedene Weise Händlern und Verbrauchern zur Überprüfung von gekaufter Ware zur Verfügung gestellt werden. Hierzu ist eine Kommunikation zwischen Händler bzw. Kunden einerseits und dem Hersteller bzw. dem zentralen Speicher andererseits erforderlich. Besonders vorteilhaft ist die Kommunikation über das Internet 24, welches symbolisch in Fig. 2 gezeigt ist. Der Interessent - Verbraucher bzw. Händler - muss die auf der Packung erkennbaren Daten, insbesondere den verschlüsselten Code 18, durchgeben an die Zentrale bzw. den Auswertungsrechner. Dieser überprüft, ob die durchgegebenen Zahlen für Herstellungsort, -zeit und Marke zutreffen.

Die Kommunikation zwischen dem Interessenten und der Zentrale bzw. dem Auswertungsrechner 22 kann auf verschiedene Weise erfolgen. Der einfachste·Weg· geht über ein Handy 25 und das Intemet 24. Komfortabler kann die Kommunikation über einen Personalcomputer, also über einen PC 26 erfolgen. Eine Besonderheit ist das Ablesen der Daten an den Packungen mit Hilfe eines Scanners 27, der über das Intemet 24 oder auf andere Weise direkt mit dem Auswertungsrechner 22 verbunden sein kann, so dass die eingelesenen Daten unmittelbar zu einer Antwort führen, die an dem Scanner 27 angezeigt werden kann.

Die Einheiten bzw. Aggregate für die Ermittlung und Anbringung der Codes an den Packungen, also Einheiten aus Rechner und Drucker, werden zweckmäßigerweise in der Zentrale unter Einsatz des Schlüssels 19 programmiert, der Produktionsstätte zur Verfügung gestellt und nach Erfüllung der Aufgabe an die Zentrale zurückgegeben. Die Programmierung kann allerdings auch über auswechselbare Chips oder andere Datenträger unmittelbar in der Produktionsstätte erfolgen.

Die Zentrale für die Zusammenstellung und Speicherung der Kontrolldaten kann regional, zum Beispiel nach Bundesländern, national oder international eingerichtet sein.

### Bezugszeichenliste

- 10: Zigarettenpackung
- 11: Gebindepackung
- 12: Außenumhüllung
- 13: Karton
- 14: Kennziffer
- 15: Packer
- 16: Gebindepacker
- 17: Kartonpacker
- 18: Code
- 19: Schlüssel
- 20: Schlüssetrechner
- 21: Zentralrechner
- 22: Auswertungsrechner
- 23: Datenträger
- 24: Internet
- 25: Handy
- 26: PC
- 27: Scanner

## Patentansprüche

1. Verfahren zur identifizierbaren Kennzeichnung und Authentifikation von Packungen, insbesondere Zigarettenpackungen, mit Hilfe von an den Packungen angebrachten Kennzeichnungen,
- wobei jede Packung (10, 11, 13) bei der Herstellung mit einer Kennziffer (14) und einem der Kennziffer (14) zugeordneten verschlüsselten Code (18) versehen wird,
- wobei jeder Fertigungsanlage und/oder Verpackungsmaschine für die Herstellung der Packungen (10, 11, 13) für die Festlegung des verschlüsselten Codes (18) ein von Zeit zu Zeit wechselnder Schlüssel (19) zugewiesen wird,
- wobei die Kennziffer (14) und der daraus erzeugte verschlüsselte Code (18) einem Zentralrechner (21) zugeführt werden, der Aufstellungen anfertigt, die jeweils Gegenüberstellungen von Kennziffern (14) und zugeordneten verschlüsselten Codes (18) enthalten, und
- wobei ein Auswertungsrechner (22), der für eine Abfrage durch Benutzer eingerichtet ist, als Authentifikationsdaten die einander zugeordneten Kennziffern (14) und verschlüsselten Codes (18), nicht jedoch den Schlüssel (19), erhält.

2. Verfahren nach Anspruch 1, **dadurch gekennzeichnet, dass** der Schlüssel (19) zentral für jede Fertigungsanlage und/oder Verpackungsmaschine erstellt und verdeckt, insbesondere in einer abgekapselten Einheit aus Rechner und Drucker - Codierungsaggregat -, der Fertigungsanlage und/oder jeder Verpackungsmaschine zur Verfügung gestellt wird.

3. Verfahren nach Anspruch 2, **dadurch gekennzeichnet, dass** der Schlüssel (18) von einem Schlüsselrechner (20) ermittelt und über das Codierungsaggregat der Produktionsstätte oder Verpackungsmaschine zur Verfügung gestellt wird.

4. Verfahren nach Anspruch 1, 2 oder 3, **dadurch gekennzeichnet, dass** der Schlüssel (19) für die einer Fertigungsanlage und/oder Verpackungsmaschine zugeordneten verschlüsselten Codes (18) auf eine bestimmte Fertigungsmenge und/oder Fertigungsdauer beschränkt ist.

5. Verfahren nach Anspruch 1, 2, 3 oder 4, **dadurch gekennzeichnet, dass** der an der Packung anzubringende verschlüsselte Code (18) aufgrund von objektiven Produktionskennziffern, insbesondere aufgrund einer ebenfalls an der Packung angebrachten, aus Produktionsdaten bestehenden Kennziffer (14), während der laufenden Produktion durch das Codierungsaggregat mit Hilfe des Schlüssels (19) erzeugt wird, insbesondere auf der Grundlage einer mathematischen Formel.

6. Verfahren nach einem der vorangehenden Ansprüche, **dadurch gekennzeichnet, dass** Zigarettenpackungen (10) und/oder Gebindepackungen (11) und/oder Versandkartons (13) für Zigarettenpackungen (10) oder Gebindepackungen (11) jeweils mit einem verschlüsselten Code (18) gekennzeichnet sind, insbesondere mit unterschiedlichen Codes (18).

7. Verfahren nach einem der vorangehenden Ansprüche, **dadurch gekennzeichnet, dass** auf jeder Packung der verschlüsselte Code (18) und die Informationen über die Produktion enthaltende Kennziffer (14) unmittelbar neben- oder untereinander angebracht sind.

8. Verfahren nach einem der vorangehenden Ansprüche, **dadurch gekennzeichnet, dass** die Authentifikationsdaten, nämlich Kennziffern (14) und verschlüsselten Code (18), über ein separates, internes Netz oder über ein öffentliches Netz, insbesondere über Internet (24), abgefragt werden, insbesondere mittels Handy (25) oder PC (26) oder Scanner (27).

9. Einrichtung zur identifizierbaren Kennzeichnung und Authentifikation von Packungen, insbesondere Zigarettenpackungen (10), mit Hilfe von an den Packungen angebrachten fertigungsbedingten Kennzeichnungen, mit folgenden Merkmalen.
a) Herstellungsmaschinen oder Verpackungsmaschinen für die Fertigung der Packungen und/oder einer Fertigungsanlage mit diesen zugeordneten Codierungsaggregaten letztere bestehend aus einem Rechner und einem Druckwerk zum Anbringen von verschlüsselten Codes (18) an den Packungen,
b) die Codierungsaggregate sind jeweils einstellbar zur Erzeugung eines verschlüsselten Codes (18) durch Verschlüsseln einer fertigungsbedingten Kennziffer (14),
c) einem Zentralrechner (21) zur Speicherung der verschlüsselten Codes (18) zusammen mit den fertigungsbedingten, auf den Packungen angebrachten Kennziffern (14),
d) einem Auswertungsrechner (22) zum Abrufen der einander zugeordneten Kennziffern (14) und verschlüsselten Codes (18) vom Zentralrechner (21) als Authentifikationsdaten, nicht jedoch der Schlüssel (19),
e) die Authentifikationsdaten sind beim Auswertungsrechner (22) über ein Kommunikationsnetz abrufbar.

10. Einrichtung nach Anspruch 9, **gekennzeichnet durch** einen gesonderten Schlüsselrechner (20) für die Ermittlung eines einer Produktionsanlage und/oder einer Einzelmaschine zugeordneten Schlüssels (19).

## Claims

1. Method for the identifiable identification and authentication of packs, in particular cigarette packets, with the aid of identifiers applied to the packs,
- each pack (10, 11, 13) being provided during production with an identifying number (14) and an encrypted code (18) assigned to the identifying number (14),
- each fabrication plant and/or packaging machine for the production of the packs (10, 11, 13) being allocated a key (19), which changes from time to time, to define the encrypted codes (18),
- the identifying number (14) and the encrypted code (18) produced from this being supplied to a central computer (21), which prepares inventories which in each case contain comparisons between identifying numbers (14) and associated encrypted codes (18), and
- an evaluation computer (22), which is set up for a query by a user, containing as authentication data the mutually associated identifying numbers (14) and encrypted codes (18) but not the key (19).

2. Method according to Claim 1, **characterized in that** the key (19) is set up centrally for each fabrication plant and/or packaging machine and is made available to the fabrication plant and/or each packaging machine in hidden form, in particular in an encapsulated unit comprising computer and printer, an encryption unit.

3. Method according to Claim 2, **characterized in that** the key (18) is determined by a key computer (20) and made available to the production site or packaging machine via the encryption unit.

4. Method according to Claim 1, 2 or 3, **characterized in that** the key (19) for the encrypted codes (18) assigned to a fabrication plant and/or packaging machine is restricted to a specific fabrication quantity and/or fabrication period.

5. Method according to Claim 1, 2, 3 or 4, **characterized in that** the encrypted code (18) to be applied to the pack is produced during continuous production by the encryption unit with the aid of the key (19), in particular on the basis of a mathematical formula, on the basis of objective production identifying numbers, in particular on the basis of an identifying number (14) likewise applied to the pack and consisting of production data.

6. Method according to one of the preceding claims, **characterized in that** cigarette packets (10) and/or multi-packs (11) and/or dispatch cartons (13) for cigarette packets (10) or multi-packs (11) are respectively identified with an encrypted code (18), in particular with different codes (18).

7. Method according to one of the preceding claims, **characterized in that** the encrypted code (18) and the identifying number (14) containing information about the production are applied to each pack immediately beside or below one another.

8. Method according to one of the preceding claims, **characterized in that** the authentication data, namely identifying numbers (14) and encrypted code (18) are interrogated via a separate, internal network or via a public network, in particular via the Internet (24), in particular by means of mobile telephone (25) or PC (26) or scanner (27).

9. Device for the identifiable identification and authentication of packs, in particular cigarette packets (10), with the aid of fabrication-based identifiers applied to the packs, having the following features:
a) production machines or packaging machines for the fabrication of the packs and/or a fabrication plant with encryption units assigned to the latter, the said encryption units comprising a computer and a printing unit for applying encrypted codes (18) to the packs,
b) the encryption units can in each case be adjusted in order to produce an encrypted code (18) by encrypting a fabrication-based identifying number (14),
c) a central computer (21) for storing the encrypted codes (18) together with the fabrication-based identifying numbers (14) applied to the packs,
d) an evaluation computer (22) for retrieving the mutually associated identifying numbers (14) and encrypted codes (18) from the central computer (21) as authentication data but not the key (19),
e) the authentication data can be retrieved from the evaluation computer (22) via a communications network.

10. Device according to Claim 9, **characterized by** a separate key computer (20) for the determination of a key (19) assigned to a production plant and/or an individual machine.

## Revendications

1. Procédé de marquage identifiable et d'authentification de paquets, en particulier de paquets de cigarettes, au moyen de marques appliquées sur les paquets, dans lequel
chaque paquet (10, 11, 13) est, lors de sa fabrication, pourvu d'un numéro distinctif (14) et d'un code chiffré (18) associé à ce numéro distinctif (14),
à chaque installation de fabrication et/ou empaqueteuse pour la fabrication des paquets (10, 11, 13) est attribuée pour la fixation du code chiffré (18) une clé (19) qui change de temps en temps,
le numéro distinctif (14) et le code chiffré (18) produit à partir de celui-ci sont envoyés à un ordinateur central (21) qui établit des états qui contiennent des juxtapositions de numéros distinctifs (14) et de codes chiffrés associés (18), et
un ordinateur d'exploitation (22) qui est conçu pour être interrogé par des utilisateurs contient comme données d'authentification les numéros distinctifs (14) et les codes chiffrés (18) associés, mais non la clé (19).

2. Procédé selon la revendication 1, **caractérisé par le fait que** la clé (19) est établie et cachée de manière centrale pour chaque installation de fabrication et/ou empaqueteuse, en particulier dans un bloc enfermé constitué d'un ordinateur et d'une imprimante (bloc de codage), et mise à la disposition de l'installation de fabrication et/ou de chaque empaqueteuse.

3. Procédé selon la revendication 2, **caractérisé par le fait que** la clé (18) est déterminée par un ordinateur à clé (20) et mise à la disposition du lieu de production ou de l'empaqueteuse par l'intermédiaire du bloc de codage.

4. Procédé selon l'une des revendications 1, 2 et 3, **caractérisé par le fait que** la clé (19) pour les codes chiffrés (18) associés à une installation de fabrication et/ou une empaqueteuse est limitée à une quantité et/ou une durée déterminée de production.

5. Procédé selon l'une des revendications 1, 2, 3 et 4, **caractérisé par le fait que** le code chiffré (18) à appliquer sur le paquet est produit sur la base de numéros distinctifs de production objectifs, en particulier sur la base d'un numéro distinctif (14) constitué de données de production et également appliqué sur le paquet, au cours de la production, par le bloc de codage à l'aide de la clé (19), en particulier sur la base d'une formule mathématique.

6. Procédé selon l'une des revendications précédentes, **caractérisé par le fait que** des paquets de cigarettes (10) et/ou des paquets de groupement (11) et/ou des cartons d'expédition (13) pour des paquets de cigarettes (10) ou des paquets de groupement (11) sont marqués chacun avec un code chiffré (18), en particulier avec des codes (18) différents.

7. Procédé selon l'une des revendications précédentes, **caractérisé par le fait que** sur chaque paquet, le code chiffré (18) et le numéro distinctif (14) contenant des informations sur la production sont appliqués immédiatement l'un à côté de l'autre ou l'un au-dessous de l'autre.

8. Procédé selon l'une des revendications précédentes, **caractérisé par le fait que** les données d'authentification, à savoir les numéros distinctifs (14) et les codes chiffrés (18), sont consultées par un réseau interne séparé ou par un réseau public, en particulier par Internet (24), en particulier au moyen d'un téléphone portable (25), d'un PC (26) ou d'un scanner (27).

9. Dispositif de marquage identifiable et d'authentification de paquets, en particulier de paquets de cigarettes (10), au moyen de marques de fabrication appliquées sur les paquets, ayant les caractéristiques suivantes :
a) des confectionneuses ou des empaqueteuses pour la fabrication des paquets et/ou une installation de fabrication avec des blocs de codage associés à celles-ci, ces derniers étant constitués d'un ordinateur et d'une imprimante pour l'application de codes chiffrés (18) sur les paquets,
b) les blocs de codage sont réglables pour la production d'un code chiffré (18) par chiffrement d'un numéro distinctif de fabrication (14),
c) un ordinateur central (21) pour la mise en mémoire des codes chiffrés (18) conjointement avec les numéros distinctifs de fabrication (14) appliqués sur les paquets,
d) un ordinateur d'exploitation (22) pour la consultation des numéros distinctifs (14) et des codes chiffrés (18) associés par l'ordinateur central (21) comme données d'authentification, mais non de la clé (19),
e) les données d'authentification peuvent être consultées auprès de l'ordinateur d'exploitation (22) par un réseau de télécommunications.

10. Dispositif selon la revendication 9, **caractérisé par** un ordinateur à clé séparé (20) pour la détermination d'une clé (19) affectée à une installation de production et/ou à une machine individuelle.
